# EUROPÄISCHE PATENTSCHRIFT

(11) **EP 0 916 832 B1**
(45) Veröffentlichungstag und Bekanntmachung des Hinweises auf die Patenterteilung: **18.12.2002**
(21) Anmeldenummer: 98119585.2
(22) Anmeldetag: 16.10.1998
(51) Int. Cl.: F02F 3/16, F16J 9/00

(54) **Gekühlter Ringträger**
Cooled ring carrier
Support segment de piston refroidi

(30) Priorität: 12.11.1997 DE 19750021
(43) Veröffentlichungstag der Anmeldung: 19.05.1999
(73) Patentinhaber: MAHLE GMBH, D-70376 Stuttgart (DE)
(72) Erfinder: Bing, Karlheinz, 71686 Remseck (DE); Hackh, Thomas, 70619 Stuttgart (DE); Rühle, Martin, 70180 Stuttgart (DE)

(56) Entgegenhaltungen:
- DE-A- 2 624 412
- DE-A- 19 722 053
- US-A- 4 907 545

## Beschreibung

Die Erfindung betrifft einen gekühlten Ringträger nach dem Oberbegriff des Anspruchs 1. Ein derartiger Ringträger ist aus der DE-PS 26 24 412 bekannt. Dort wird ein ebenes, kreisringförmiges Blech an der Unterflanke eines Ringträgers angelegt und zu einem U-förmigen Querschnitt um den Ringträger herumgebogen, in vorgedrehte Ausnehmungen des Ringträgers gelegt, festgespannt und anschließend verschweißt. Da das Blech um den Ringträger herum zu einer U-Form gebogen wird, läßt sich ein erheblicher Hinterschnitt zwischen Blechkühlkanal und Ringträger erzielen. Nachteil bei diesem Verfahren ist das durch den Ringträger eingeschränkte Handling des Bleches beim Biegen und die Tatsache, daß das Blech vor dem Schweißen festgespannt werden muß. Es hat sich auch gezeigt, daß eine druckdichte Verbindung zwischen Blechkühlkanal und Ringträger - Voraussetzung für ein problemloses Eingießen des Ringträgers - nicht sicher gewährleistet werden kann.

Ein gattungsgemäßer Ringträger ist auch aus der US 4,907,545 bekannt, wobei das Blech ebenfalls durch Schweißen oder Löten am Ringträger befestigt wird. In den Figuren 1 und 4 der Schrift sitzt das Blech mit stumpfem Stoß an der radial innen liegenden Wand bzw. an von dieser ausgehenden Stegen des Ringträgers, in Fig. 5, 6 und 7 wird das Blech flächig an ebene oder gekrümmte Flächen des Ringträgers angelegt. Allen dargestellten Ausführungsbeispielen ist gemeinsam, daß das Blech vor dem Verschweißen entweder durch Anwendung von Temperaturdifferenzen aufwendig in den Ringträger eingeschrumpft werden muß oder daß es beim Schweißen festgespannt werden muß und daß die Schweißnahtquerschnitte relativ gering sind. Ein Nachteil beim Einschrumpfen mit stumpfem Stoß ist auch, daß das relativ dünne Blech auf Knickung beansprucht wird.

Gattungsgemäße Ringträger sind ebenfalls aus der JP-OS 05-240347 und der EP 791 738 bekannt. Auch bei diesen wird das den Kühlkanal bildende Blech unter Anwendung von Temperaturdifferenzen entweder in die kreiszylinderförmige, radial innen liegende Fläche des Ringträgers oder in Eindrehungen bzw. Nuten des Ringträgers eingeschrumpft.

Die Erfindung beschäftigt sich daher mit dem Problem, einen Blechkühlkanal vor dem Verschweißen mit einem Ringträger so an diesem zu befestigen, daß eine sichere, dichte Schweißverbindung zwischen Ringträger und Blechkühlkanal entstehen kann, daß Spannvorrichtungen beim Schweißen entfallen können und daß auf Einschrumpfen unter Anwendung von Temperaturdifferenzen verzichtet werden kann.

Dieses Problem wird bei gattungsgemäßen Ringträgern gelöst durch eine Ausbildung mit den kennzeichnenden Merkmalen der Ansprüche 1 und 3. Eine vorteilhafte Weiterbildung ist im Unteranspruch angegeben.

Erfindungsgemäß ist der Winkel zwischen der bzw. den nach innen weisenden Flächen des Ringträgers und dem Blechkühlkanal im Bereich seiner beiden den Ringträger kontaktierenden Kanten bzw. Flächen kleiner als 45°. Als Blechkühlkanal wird dabei auch ein Blechteil bezeichnet, das eine umlaufende, zum Ringträger hin weisende Öffnung aufweist. Der Durchmesserunterschied zwischen Ringträger und Blechkühlkanal kann z. B. 0,4 mm betragen, wobei der elastische Anteil der Verformung beim Einpressen ca. 0,15 bis 0,2 mm beträgt, also ein bestimmter Anteil an plastischer Verformung des Blechkühlkanals beim Einpressen hinzukommt.

Die radial nach innen weisende Fläche des Ringträgers, an der der Blechkühlkanal eingespannt ist, kann auch aus zwei kreiszylindrischen Teilflächen mit unterschiedlichem Durchmesser bestehen. In diesem Fall weisen die beiden den Ringträger kontaktierenden Kanten bzw. Flächen ebenfalls einen unterschiedlichen Durchmesser auf.

Zur exakten axialen Positionierung des Blechkühlkanals im Ringträger kann an der nach innen weisenden Fläche des Ringträgers ein wenige Zehntelmillimeter hoher Steg angedreht sein, gegen den eine oder beide umlaufenden Kanten des Blechkühlkanals anliegen.

Grundgedanke der Erfindung ist es, die elastischen Eigenschaften des Blechs für ein Verspannen im Ringträger und ein entsprechend sicheres Verschweißen von Ringträger und Blechkühlkanal zu nutzen, ohne ein Einschrumpfen des Blechkühlkanals unter Anwendung von Temperaturdifferenzen - Kühlen des Blechkühlkanals und/oder Erwärmen des Ringträgers-durchzuführen. Wenn die den Ringträger kontaktierenden Kanten bzw. Flächen des Blechkühlkanals mit relativ kleinem Winkel an die Innenfläche des Ringträgers herangeführt werden, dann kann der Blechkühlkanal - obwohl sein Außendurchmesser unmittelbar vor der Montage größer ist als der Innendurchmesser des Ringträgers - mit einer Montagevorrichtung in vorgespanntem Zustand in den Ringträger eingepreßt werden. Bei radial verlaufenden Kanten des Kühlkanals ist dieses Verfahren nicht oder nur unter großen Schwierigkeiten anwendbar.

Es ergibt sich der zusätzliche Vorteil, daß beim Schweißen, verglichen mit einem stumpfem Stoß der Blechkanten am Ringträger, eine relativ große Dichtfläche am Übergang von Ringträger zum Blechkühlkanal entsteht, wodurch die Wahrscheinlichkeit von Undichtigkeiten verringert wird.

Ein weiterer Vorteil der Erfindung ist es, daß der Ringträger seine übliche, im Querschnitt - abgesehen von den einzustechenden Ringnuten - etwa rechteckige Form beibehalten kann und keine besonderen Konturen an den Ringträgerrücken angedreht oder angegossen werden müssen.

Als Schweißverfahren zum Verbinden von Ringträger und Blechkühlkanal kommen insbesondere in Betracht Laserschweißen, EB-Schweißen und Mikroplasmaschweißen. Der beim Schweißen ggfs. erforderliche Zusatzwerkstoff kann entweder von außen zugeführt werden oder in Form einer abzuschmelzenden Kante schon am Ringträger vorhanden sein. Ziel ist es, den im Querschnitt keilförmigen Spalt bzw. Zwickel zwischen Ringträger und Blechkühlkanal weitestgehend mit Schmelze zu füllen, da so die Wahrscheinlichkeit einer druckdichten Verbindung am größten wird.

Prinzipiell ist es auch möglich, die Geometrie der zu verbindenden Teile mit einem Winkel von maximal 45° zwischen dem Blechkühlkanal und der nach innen weisenden Fläche des Ringträgers wie beschrieben beizubehalten und bei ansonsten gleichen Bedingungen den Blechkühlkanal mit einem etwas kleineren Außendurchmesser herzustellen als den Innendurchmesser des Ringträgers. Dann wird vor bzw. beim Schweißen entweder der Blechkühlkanal von innen geweitet und so in den Ringträger eingespannt oder es wird auf ein Einspannen des Blechkühlkanals in den Ringträger verzichtet. Als Vorteil verbleibt dann, daß die Geometrie der Schweißnaht-infolge des großen Nahtquerschnittes - eine druckdichte Verbindung über den gesamten Umfang ermöglicht.

Die Erfindung wird nachfolgend anhand eines Ausführungsbeispiels näher beschrieben.

Es zeigen:

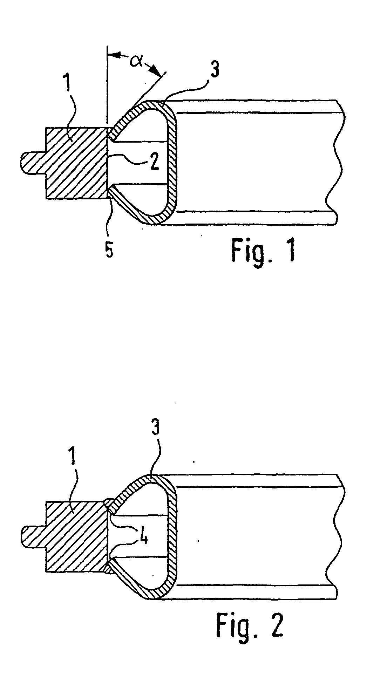

- Fig. 1: einen erfindungsgemäßen gekühlten Ringträger im Querschnitt vor dem Verschweißen von Ringträger und Blechkühlkanal
- Fig. 2: den erfindungsgemäßen Ringträger in geschweißtem Zustand.

Der gekühlte Ringträger besteht aus einem kreisrunden Ringträger 1 mit einer nach radial innen weisenden kreiszylindrischen Fläche 2 und einem Blechkühlkanal 3 aus austenitischem Stahl, der einstückig aus einem ebenen Stahlblech durch plastische Verformung hergestellt ist. Der Blechkühlkanal 3 wird vor dem Verschweißen von Ringträger 1 und Blechkühlkanal 3 mit Hilfe einer nicht dargestellten Montagevorrichtung in den Ringträger 1 eingepreßt. Dabei ist die Montagevorrichtung so ausgeführt, daß der Blechkühlkanal 3 unter axial aufgebrachtem Druck seinen Außendurchmesser verkleinert - z. B. in einer kegelförmigen Aufnahme - und in so vorgespanntem Zustand aus der Montagevorrichtung in den Ringträger 1 eingepreßt werden kann. Danach sitzt der Blechkühlkanal 3 so fest eingespannt im Ringträger 1, daß auf Spannvorrichtungen beim Schweißen verzichtet werden kann. Der Außendurchmesser des Blechkühlkanals ist vor dem Einpressen ca. 0,35 mm größer als der Innendurchmesser des Ringträgers. Dadurch bilden sich beim Einpressen am Innenumfang des Blechkühlkanals 3 Tangentialdruckspannungen aus. Der Winkel α zwischen der bzw. den nach innen weisenden kreiszylindrischen Flächen 2 des Ringträgers 1 und dem Blechkühlkanal 3 im Bereich seiner beiden den Ringträger kontaktierenden Kanten 4 beträgt 35°. Dies führt dazu, daß der Blechkühlkanal sich gut in den Ringträger einpresssen läßt und dabei vergleichbar fest im Ringträger sitzt, wie beim Einschrumpfen mittels Temperaturdifferenzen.

Wie Fig. 2 zeigt, wird beim Verschweißen von Ringträger 1 und Blechkühlkanal 3 der ringförmig umlaufende Zwickel bzw. keilförmige Spalt 5 mit Schmelze aufgefüllt.

Dies führt zu einer guten Abdichtung des Blechkühlkanals 3, so daß beim Alfinieren vor dem Eingießen des gekühlten Ringträgers in den Kolben und beim Eingießen keine eingeschlossenen Gase aus dem Blechkühlkanal austreten und die Schmelze durch Oxidbildung verunreinigen können.

## Patentansprüche

1. Gekühlter Ringträger (1) für einen Kolben eines Verbrennungsmotors mit mindestens einer radial nach innen weisenden, kreiszylindrischen Fläche (2) und einem durch Schweißen oder Löten an der bzw. den Flächen (2) befestigbaren Blechkühlkanal (3), der mit einer Preßpassung in den Ringträger (1) eingespannt ist und der zwei, den Ringträger (1) an der bzw. den radial nach innen weisenden Flächen (2) umlaufend kontaktierende Kanten bzw. Flächen (4) aufweist,
**dadurch gekennzeichnet,**
**daß** der Winkel α zwischen der bzw. den nach innen weisenden Flächen (2) des Ringträgers (1) und dem Blechkühlkanal (3) im Bereich seiner beiden den Ringträger (1) kontaktierenden Kanten bzw. Flächen (4) kleiner als 45° ist.

2. Ringträger nach Anspruch 1,
**dadurch gekennzeichnet,**
**daß** sich die Stirnseiten des Blechs etwa gegenüberliegen.

3. Verfahren zum Befestigen eines Blechkühlkanals (3) in einem Ringträger (1) mit mindestens einer.radial nach innen weisenden, kreiszylindrischen Fläche (2), wobei der Ringträger (1) und der Blechkühlkanal (3) gemeinsam einen geschlossenen Kühlkanal eines gekühlten Ringträgers für Kolben bilden und nach dem Befestigen miteinander verschweißt werden,
**dadurch gekennzeichnet,**
**daß** zunächst der Blechkühlkanal (3) in einer Montagevorrichtung elastisch so verformt wird, daß er seinen Außendurchmesser verkleinert und er in diesem vorgespannten Zustand in den Ringträger (1) eingepreßt wird, wobei der Winkel α zwischen der bzw. den nach innen weisenden Flächen (2) des Ringträgers (1) und dem Blechkühlkanal (3) im Bereich seiner den Ringträger kontaktierenden Kanten bzw. Flächen (4) kleiner als 45° ist.

## Claims

1. Cooled ring carrier (1) for a piston of an internal-combustion engine with at least one circular cylindrical face (2) pointing radially inwardly and a sheet metal cooling duct (3) which can be fastened to the face or faces (2) by welding or soldering and can be fixed into the ring carrier (1) with an interference fit and comprises two edges or faces (4) peripherally contacting the ring carrier (1) at the face or faces (2) pointing radially inwardly, **characterised in that** the angle α between the face or faces (2) of the ring carrier (1) pointing inwardly and the sheet metal cooling duct (3) in the region of its two edges or faces (4) contacting the ring carrier (1) is less than 45°.

2. Ring carrier according to claim 1, **characterised in that** the end faces of the sheet metal approximately oppose one another.

3. Method for fastening a sheet metal cooling duct (3) in a ring carrier (1) with at least one circular cylindrical face (2) pointing radially inwardly, the ring carrier (1) and the sheet metal cooling duct (3) together forming a closed cooling duct of a cooled ring carrier for pistons and being welded to one another after fastening, **characterised in that** initially the sheet metal cooling duct (3) is elastically deformed in an assembly device such that its external diameter is reduced and it is pressed into the ring carrier (1) in this biased state, the angle α between the face(s) (2) of the ring carrier (1) pointing inwardly and the sheet metal cooling duct (3) in the region of its edges or faces (4) contacting the ring carrier being less than 45°.

## Revendications

1. Porte-segment refroidi (1) pour un piston d'un moteur à combustion interne, avec au moins une surface cylindrique circulaire (2) dirigée dans la direction radiale interne et avec un canal de refroidissement en tôle (3), qui peut être fixé par soudage ou brasage sur la ou les surfaces (2), qui est fixé avec ajustement serré dans le porte-segment (1), et présente des arêtes ou surfaces (4) contactant dans le sens périphérique le porte-segment (1) sur la et/ou les surfaces (2) dirigées dans la direction radiale interne, **caractérisé en ce que** l'angle α entre la ou les surfaces (2) dirigées vers l'intérieur du porte-segment (1) et le canal de refroidissement en tôle (3) dans la zone de ses deux arêtes ou surfaces (4) au contact du porte-segment (1) est inférieur à 45°.

2. Porte-segment suivant la revendication 1, **caractérisé en ce que** les côtés frontaux de la tôle sont à peu près en vis-à-vis.

3. Procédé de fixation d'un canal de refroidissement en tôle (3) dans un porte-segment (1) avec au moins une surface cylindrique circulaire (2), dirigée dans la direction radiale interne, le porte-segment (1) et le canal de refroidissement en tôle (3) formant conjointement un canal de refroidissement fermé d'un porte-segment refroidi pour piston et étant soudés entre eux après la fixation, **caractérisé en ce que** le canal de refroidissement en tôle (3) est d'abord déformé par élasticité dans un dispositif de montage, de sorte qu'il réduit son diamètre extérieur et qu'il est emmanché dans le porte-segment (1) dans cet état de précontrainte, l'angle α entre la ou les surfaces (2) dirigées vers l'intérieur du porte-segment (1) et le canal de refroidissement en tôle (3) dans la zone de ses arêtes ou surfaces (4) au contact du porte-segment étant inférieur à 45°.
